(19) Europäisches Patentamt
European Patent Office
Office européen des brevets

(11) Numéro de publication : **0 649 869 A1**

(12) # DEMANDE DE BREVET EUROPEEN

(21) Numéro de dépôt : **94402257.3**

(51) Int. Cl.$^6$ : **C08K 9/10**

(22) Date de dépôt : **07.10.94**

(30) Priorité : **20.10.93 FR 9312490**

(43) Date de publication de la demande : **26.04.95 Bulletin 95/17**

(84) Etats contractants désignés : **AT BE DE ES FR GB IT NL PT SE**

(71) Demandeur : **ELF ATOCHEM S.A.**
**4 & 8, Cours Michelet**
**La Défense 10**
**F-92800 Puteaux (FR)**

(72) Inventeur : **Sarraf, Tarek**
**9 rue du Penin**
**F-64140 Lons (FR)**
Inventeur : **Hoehn, Frédéric**
**5 rue des Chasseurs**
**F-68100 Mulhouse (FR)**
Inventeur : **Riess, Gérard**
**31 rue du Meunier**
**F-68200 Mulhouse (FR)**

(54) **Particules minérales enrobées d'élastomère, leur procédé de préparation, leur utilisation pour le renforcement de polymères thermoplastiques et lesdits polymères renforcés.**

(57) L'invention concerne des particules minérales enrobées d'élastomère caractérisées en ce qu'elles se présentent sous forme individualisée.

L'invention concerne également un procédé de préparation desdites particules, ce procédé étant caractérisé en ce qu'il consiste à :

a) faire réagir des particules minérales avec au moins un agent de couplage renfermant au moins une séquence polyoxyéthylénique et avec au moins un latex d'élastomère,

b) séparer la phase liquide des particules,

c) sécher lesdites particules.

L'invention concerne aussi l'utilisation desdites particules pour le renforcement de polymères thermoplastiques.

L'invention concerne également des polymères thermoplastiques renforcés par les particules minérales selon l'invention.



Jouve, 18, rue Saint-Denis, 75001 PARIS

La présente invention a pour objet des particules minérales enrobées d'élastomère, leur procédé de préparation, leur utilisation en tant que matériau de renforcement de polymères thermoplastiques et les polymères thermoplastiques renforcés qui en découlent. A titre d'exemple, on peut mentionner l'utilisation de particules de silice ou de carbonate de calcium enrobées d'un copolymère styrènebutadiène au renforcement de matrices à base de polystyrène (PS et PS choc) ou de polyméthacrylate de méthyle (PMMA).

Il est connu que des particules minérales peuvent être utilisées comme matériau de renforcement de matrices polymériques.

Dans EP 0 249 524, on décrit deux types de granulés sphériques à base de silice. Les granulés du premier type présentent une taille moyenne d'au moins 300 μm et une densité comprise entre 0,15 et 0,32, ceux du deuxième type ont une taille moyenne d'au moins 80 μm et une densité supérieure à 0,32.

Ces granulés à base de silice sont préparés par précipitation d'une suspension de particules de faible taille en présence d'un hydrophobant et d'un solvant organique peu ou non miscible à l'eau, les granulés étant ensuite récupérés, éventuellement lavés et séchés. Les granulés ainsi obtenus peuvent subir une étape supplémentaire de densification.

Ces granulés sphériques à base de silice peuvent être utilisés pour le renforcement des élastomères.

Dans EP 0 213 931, on décrit des flocs de grande taille comprenant des agrégats de particules inorganiques et un élastomère.

Le procédé d'obtention de ces flocs consiste à traiter des particules inorganiques avec un latex naturel ou synthétique et à additionner un sel hydrosoluble d'un cation multivalent à un pH inférieur à 4.

La poudre obtenue par broyage des flocs est utilisée comme matériau de renforcement de résines thermoplastiques et thermodurcissables.

Les particules minérales de l'art antérieur qui viennent d'être présentées comportent plusieurs inconvénients.

Les granulés à base de silice ne sont revêtus d'aucun enrobage compatible avec une matrice polymérique. Il s'ensuit à la fois une mauvaise dispersion dans ladite matrice et une fragilisation de la tenue mécanique du matériau renforcé.

Les particules de poudre issues du broyage des flocs se présentent sous la forme d'agglomérats de taille importante et de forme variable. Leur incorporation dans une matrice polymérique entraîne une diminution de la tenue mécanique du matériau renforcé.

Il a maintenant été trouvé de nouvelles particules minérales revêtues d'élastomère qui permettent notamment de renforcer efficacement des polymères thermoplastiques.

Un premier objet de l'invention concerne donc des particules minérales enrobées d'élastomère, particules qui se présentent sous forme individualisée et possèdent une taille relativement faible.

Au sens de l'invention, on entend par "particules minérales enrobées d'élastomère" des particules uniques recouvertes d'un enrobage à base d'élastomère.

Un autre objet de l'invention concerne un procédé pour l'obtention des particules minérales enrobées d'élastomère, procédé qui permet de contrôler efficacement l'épaisseur de l'enrobage.

Un autre objet de l'invention concerne l'utilisation de particules minérales enrobées d'élastomère pour le renforcement de polymères thermoplastiques, utilisation qui permet une incorporation homogène des particules dans le polymère.

Un autre objet de l'invention concerne les polymères thermoplastiques renforcés par les particules minérales selon l'invention, polymères qui présentent une meilleure résistance au choc.

L'invention concerne donc en premier lieu des particules minérales enrobées d'élastomère caractérisées en ce qu'elles se présentent sous forme individualisée.

Plus particulièrement, l'invention concerne de telles particules dont le diamètre moyen est compris entre 0,2 et 20 μm et dont l'épaisseur de l'enrobage à base d'élastomère est compris entre 50 et 300 nm.

L'invention concerne également un procédé pour la préparation de particules minérales enrobées d'élastomère, notamment des particules décrites ci-avant.

Ce procédé est caractérisé en ce qu'il consiste à :

a) faire réagir des particules minérales avec au moins un agent de couplage renfermant au moins une séquence polyoxyéthylénique et avec au moins un latex d'élastomère,

b) séparer la phase liquide des particules,

c) sécher lesdites particules.

L'invention concerne aussi l'utilisation des particules enrobées d'élastomère selon l'invention pour le renforcement de polymères thermoplastiques.

Dans ce but et selon une première variante, cette utilisation est caractérisée en ce que l'incorporation des particules minérales est réalisée au moment de la polymérisation.

Selon une deuxième variante, cette utilisation est caractérisée en ce que l'incorporation des particules minérales est réalisée au moment de l'extrusion.

L'invention concerne également des polymères thermoplastiques renforcés par les particules minérales selon l'invention.

Plus particulièrement, l'invention concerne le polystyrène (PS) et les alliages essentiellement à base de PS tel que le PS choc ainsi que le polyméthacrylate de méthyle (PMMA) et les alliages essentiellement à base de PMMA.

D'autres avantages apparaîtront à la lumière de la description et des exemples de réalisation non limitatifs qui vont suivre.

Les particules minérales enrobées d'élastomère selon l'invention sont généralement à base de $SiO_2$, $CaCO_3$, $Ti_20_3$, $Al(0H)_3$ et de talc et de préférence de $SiO_2$ et $CaCO_3$.

Ces particules sont en général individualisées et présentent une forme sensiblement sphérique et un diamètre moyen variant généralement de 0,2 à 20 $\mu$m et de préférence 0,5 à 10 $\mu$m.

Ces particules sont généralement recouvertes d'un enrobage à base d'élastomère dont l'épaisseur moyenne est comprise entre 50 et 300 nm et de préférence 100 et 250 nm.

Les particules minérales selon l'invention peuvent être préparées selon le procédé qui va maintenant être décrit.

La première étape du procédé consiste à faire réagir des particules minérales avec au moins un agent de couplage renfermant au moins une séquence polyoxyéthylénique et avec au moins un latex d'élastomère.

Les particules minérales sont avantageusement choisies parmi $SiO_2$, $CaCO_3$, $Ti_20_3$, $Al(0H)_3$ et le talc et de préférence $SiO_2$ et $CaCO_3$.

En général, on utilise des particules présentant une forme sensiblement sphérique et un diamètre moyen variant de 0,2 à 20 $\mu$m et de préférence 0,5 à 10 $\mu$m.

Ces particules minérales présentent généralement une surface électriquement neutre ou bien chargée négativement.

L'agent de couplage du procédé selon l'invention est choisi parmi les composés présentant au moins une séquence polyoxyéthylénique.

En général, on utilise au moins un agent de couplage choisi parmi les copolymères biséquencés AB et triséquencés ABA ou BAB où A représente la séquence polyoxyéthylénique et B représente une séquence choisie parmi le polyoxypropylène, le polystyrène, le polyméthacrylate de méthyle ou une séquence à base de monomères vinyliques et/ou acryliques. Lorsqu'il existe deux séquences B, celles-ci peuvent être identiques ou différentes.

La masse moléculaire moyenne en nombre de chaque séquence polyoxyéthylénique est généralement d'au moins 1000. De préférence, cette masse est comprise entre 2000 et 8000.

La masse moléculaire moyenne en nombre de l'agent de couplage est généralement d'au moins 1500 et de préférence comprise entre 2000 et 15000.

Le latex d'élastomère est généralement choisi parmi les latex dont l'élastomère comporte des greffons renfermant des groupes acides carboxyliques et/ou anhydrides d'acide, ces greffons étant répartis de manière statistique.

En général, on utilise un élastomère choisi parmi les homopolymères à base de monomères diéniques tels que le polybutadiène et le polyisoprène, et les copolymères à base de monomères diéniques et styréniques ou (meth)acryliques de formule

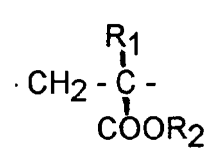

dans laquelle

$R_1$ représente un atome d'hydrogène ou un groupement méthyle

$R_2$ représente une chaîne alkyle linéaire, ramifiée ou cyclique contenant de 1 à 12 atomes de carbone.

On utilise avantageusement un copolymère à base de monomères styréniques et butadièniques (SBR) comportant des fonctions d'acides acrylique ou méthacrylique.

La taille des particules d'élastomère dans le latex est généralement choisie de telle sorte que le diamètre moyen soit compris entre 50 et 300 nm et de préférence 100 et 250 nm.

Dans la mise en oeuvre de la première étape du procédé selon l'invention, on utilise une quantité d'agent de couplage généralement comprise entre 0,05 et 1 % en poids par rapport aux particules minérales. De préférence, cette quantité est comprise entre 0,1 et 0,7 %.

La quantité maximale d'agent de couplage n'est pas en soi critique. Cependant, des quantités supérieures à 1 % ne présentent pas d'intérêt économique.

La quantité de latex est généralement choisie de telle sorte que le rapport de la masse des particules minérales à la masse de la matière sèche présente dans le latex soit compris entre 2 et 30 et de préférence 5 et 15.

La mise en présence des particules minérales, de l'agent de couplage et du latex d'élastomère peut se faire de plusieurs manières.

Selon une première manière, on mélange dans un premier temps une suspension aqueuse des particules minérales et l'agent de couplage, puis dans un deuxième temps on ajoute le latex d'élastomère au mélange ainsi obtenu.

Selon une deuxième manière, on mélange dans un premier temps les particules minérales et une solution aqueuse de l'agent de couplage, puis dans un deuxième temps on ajoute le latex d'élastomère au mélange ainsi obtenu.

Le mélange des particules minérales, de l'agent de couplage et du latex d'élastomère est généralement réalisé à température ambiante et avantageusement à une température inférieure à 30°C, sous agitation, par exemple mécanique modérée, et pendant un temps suffisant pour obtenir des particules minérales enrobées d'élastomère se présentant sous forme individualisée. En général, on estime que le temps est suffisant lorsque la phase aqueuse opalescente devient limpide.

Dans le procédé mis en oeuvre selon l'une ou l'autre des variantes, il est avantageux de contrôler le pH final du mélange. Lorsque les particules sont constituées de $SiO_2$, on opère généralement à un pH inférieur à 5 et de préférence compris entre 1,5 et 3,5. Dans le cas de particules de $CaCO_3$, un pH inférieur à 7 et de préférence compris entre 6 et 7 est généralement recommandé.

La deuxième étape du procédé selon l'invention consiste à séparer les particules minérales enrobées d'élastomère et la phase liquide.

Cette séparation peut se faire par toute méthode connue, par exemple par filtration, décantation ou centrifugation.

La troisième étape du procédé selon l'invention consiste à sécher les particules ainsi obtenues.

Ce séchage peut se faire par tout moyen connu, par exemple dans une étuve ou dans un lit fluidisé classiques, et de préférence à une température inférieure à 50 °C.

L'invention concerne aussi l'utilisation des particules minérales enrobées d'élastomère selon l'invention pour le renforcement de polymères thermoplastiques.

Selon une première variante, l'utilisation selon l'invention est caractérisée en ce qu'elle consiste à incorporer les particules minérales enrobées d'élastomère au moment de la polymérisation radicalaire ou anionique.

Selon une deuxième variante, l'utilisation selon l'invention est caractérisée en ce qu'elle consiste à incorporer les particules minérales enrobées d'élastomère au moment de l'extrusion.

Les procédés de polymérisation radicalaire ou anionique et d'extrusion sont connus de l'homme du métier et ne constituent pas en eux-mêmes un objet de l'invention.

La quantité de particules minérales enrobées d'élastomère est variable selon la nature du polymère thermoplastique préparé. En général on utilise une quantité inférieure à 70 % en poids du polymère formé et avantageusement de 5 à 500.%.

L'invention concerne également les polymères thermoplastiques renforcés par les particules minérales selon l'invention, polymères qui présentent des caractéristiques mécaniques améliorées et plus particulièrement une meilleure résistance au choc.

Plus particulièrement, l'invention concerne les polymères thermoplastiques à base de monomères de styrène et de butadiène (PS choc), ces polymères étant caractérisés en ce que les particules minérales se trouvent incluses dans les nodules de polybutadiène.

Les exemples non limitatifs qui suivent sont donnés à titre d'illustration de l'invention.

***EXEMPLE 1***.

1 - On disperse 100 g de $SiO_2$ (référence c800 SIFRACO) dans 200 ml d'eau. On ajoute ensuite 0,5 g d'un copolymère polyoxyéthylène-polyoxypropylène (POE/POP) présentant une masse moléculaire de 8350 et dont 80 % en poids est représenté par la séquence POE (référence Sympéronic F68 BAYER).

Après une heure sous agitation (400 rpm) à 25 °C, les particules minérales sont récupérées par filtration et séchées à 40 °C dans une étuve.

2 - Les particules minérales ainsi traitées (2 g) sont dispersées dans l'eau (50 g) et le pH est ajusté à 1,5. On ajoute à la dispersion un latex renfermant un copolymère à base de monomères styrèniques/butadièniques (56:44 en mole %) et présentant des fonctions d'acide acrylique (2,1 $10^{-4}$ mole/g de copolymère sec) (latex SBR - BASF). Ce latex présente un pH égal à 3,5, un taux de matière sèche de 29 % et un diamètre moyen des particules de 180 nm.

Après une heure sous agitation (750 rpm) à température ambiante, le mélange est filtré, les particules minérales sont récupérées, lavées à l'eau distillée et séchées.

La quantité de copolymère SBR fixé sur les particules minérales ainsi traitées est déterminée par différence de pesée avant et après pyrolyse à 550 °C pendant une heure.

Les caractéristiques des particules minérales obtenues sont rassemblées dans le tableau 1.

***EXEMPLES 2 A 4***.

On opère dans les conditions de l'exemple 1, le rapport R étant variable.

Les caractéristiques des particules minérales obtenues sont rassemblées dans le tableau 1.

***EXEMPLE 5***.

On procède dans les conditions de l'exemple 1 en présence de particules de $CaCO_3$ (Référence Hydrocarb OMYA), le pH étant ajusté à 6,5.

Les caractéristiques des particules minérales obtenues sont rassemblées dans le tableau 1.

***EXEMPLES 6 A 8***.

On procède dans les conditions de l'exemple 5, le rapport R étant variable.

Les caractéristiques des particules minérales obtenues sont rassemblées dans le tableau 1.

***EXEMPLES 9 A 13***.

On procède dans les conditions de l'exemple 5 en présence de 0,2 g de copolymère POE/POP.

Les caractéristiques des particules minérales obtenues sont rassemblées dans le tableau 1.

***EXEMPLES 14 A 21***.

On disperse m1 g de particules minérales préparées selon l'exemple 5 dans un mélange comprenant 6 g d'éthylbenzène, m2 g de styrène, m3 g = 0,152 $10^{-2}$ m2 g de peroxyde de benzoyle, m4 g d'homopolystyrène et m5 g de polybutadiène.

Le mélange, maintenu sous agitation à 50 rpm, est porté à 92° C pendant 4 h puis à 150° C pendant 3 h.

Les caractéristiques des matériaux obtenus sont présentées dans le tableau 2.

La photographie 1 représente une vue au microscope électronique du matériau selon l'exemple 17.

***EXEMPLES 22 ET 23 (COMPARATIFS)***.

On procède respectivement selon les exemples 14 et 18 en présence de particules minérales de $CaCO_3$ non enrobées d'élastomère.

Les caractéristiques des matériaux obtenus sont présentées dans le tableau 2.

***EXEMPLES 24 A 26***.

On mélange m1 g de particules minérales préparées selon l'exemple 5 et m6 g de polystyrène choc renfermant 6 % en poids de polybutadiène.

Le mélange est extrudé à 200 °C dans une extrudeuse double vis.

Les caractéristiques des matériaux obtenus sont présentées dans le tableau 2.

La photographie 2 représente une vue au microscope électronique du matériau selon l'exemple 22.

***EXEMPLE 27 (COMPARATIF)***.

On procède selon l'exemple 25 en présence de particules minérales de $CaCO_3$ non enrobées d'élastomère.

Les caractéristiques du matériau obtenu sont présentées dans le tableau 2.

***EXEMPLE 28***

On mélange m1 g de particules minérales préparées selon l'exemple 5 et m6 g de polyméthacrylate de méthyle (PMMA).

Le mélange est extrudé dans les conditions des exemples 24 à 26.

Les caractéristiques du matériau obtenu sont présentées dans le tableau 2.

***EXEMPLE 29 (COMPARATIF)***

On procède selon l'exemple 28 en présence de particules de $CaCO_3$ non enrobées d'élastomère.

Les caractéristiques du matériau obtenu sont présentées dans le tableau 2.

| EXEMPLE | R= Particules / latex | % SBR fixé / particules | % SBR fixé / SBR introduit | Diamètre moyen (µm) | Epaisseur de la couche (nm) |
|---|---|---|---|---|---|
| 1 | 5 | 13 | 70 | 2,0 | 180 |
| 2 | 7 | 13 | 100 | 2,1 | 250 |
| 3 | 10 | 9 | 100 | 2,1 | 200 |
| 4 | 15 | 6,5 | 100 | 2,1 | 200 |
| 5 | 5 | 9,6 | 60 | 2,4 | 250 |
| 6 | 7 | 9,5 | 70 | 3,2 | 230 |
| 7 | 10 | 8,5 | 95 | 3,2 | 200 |
| 8 | 15 | 6,2 | 100 | 3,2 | 200 |
| 9 | 1 | 3,7 | 10 | 2,6 | 180 |
| 10 | 3 | 4,0 | 15 | 3,0 | 200 |
| 11 | 5 | 4,2 | 25 | 2,9 | 180 |
| 12 | 10 | 6 | 68 | 3,1 | 230 |
| 13 | 15 | 6 | 100 | 3,3 | 250 |

**Tableau 1**

| Exemple | m1 | m2 | m3 | m4 | m5 | m6 | Contrainte de traction à la rupture [1] (MPa) | Allongement à la rupture [1] (%) | Module d'élasticité en traction [1] (MPa) | Choc [2] IZOD KJ/m² |
|---|---|---|---|---|---|---|---|---|---|---|
| 14 | 10 | 90 | 0,136 | 0 | 0 | - | 36 | 3,4 | 3100 | ND |
| 15 | 5 | 95 | 0,144 | 0 | 0 | - | 34 | 3,5 | 3100 | ND |
| 16 | 15 | 85 | 0,129 | 0 | 0 | - | 31 | 2,2 | 2900 | ND |
| 17 | 10 | 85 | 0,129 | 0 | 5 | - | 25 | 15 | 2500 | 6,2 |
| 18 | 10 | 87 | 0,132 | 0 | 3 | - | 23 | 12 | 2700 | 4,6 |
| 19 | 10 | 87 | 0,132 | 3 | 0 | - | 32 | 3,3 | 3200 | ND |
| 20 | 10 | 85 | 0,129 | 5 | 0 | - | 32 | 3,1 | 3050 | ND |
| 21 | 10 | 84 | 0,127 | 3 | 3 | - | 21 | 11 | 2900 | 4,8 |
| 22 c | 10 | 90 | 0,136 | 0 | 0 | - | 26 | 1,5 | 3200 | ND |
| 23 c | 10 | 87 | 0,132 | 0 | 3 | - | 20 | 8 | 2900 | 4,1 |
| 24 | 5 | - | - | - | - | 95 | 23 | 15 | 2600 | 6,8 |
| 25 | 10 | - | - | - | - | 90 | 22 | 14 | 2600 | 6,7 |
| 26 | 15 | - | - | - | - | 85 | 19 | 10,5 | 2500 | 5,9 |
| 27 c | 10 | - | - | - | - | 90 | 20 | 9,5 | 2700 | 4,5 |
| 28 | 10 | - | - | - | - | 90 | 34 | 4,8 | 2790 | 1,3 |
| 29 c | 10 | - | - | - | - | 90 | 35 | 5,2 | 2650 | 1,1 |

[1] Norme NF : T 51-034

[2] Norme NF : T 51-911

c : comparatif

ND: non déterminé

**Tableau 2**

## Revendications

1. Particules minérales enrobées d'élastomère caractérisées en ce qu'elles se présentent sous une forme individualisée.

2. Particules selon la revendication 1 caractérisées en ce qu'elles présentent un diamètre moyen compris entre 0,2 et 20 μm.

3. Particules selon l'une des revendications 1 ou 2 caractérisées en ce que l'élastomère présente une épaisseur comprise entre 50 et 300 nm.

4. Particules selon l'une des revendications 1 à 3 caractérisées en ce que la substance minérale est choisie parmi $SiO_2$, $CaCO_3$, $Ti_2O_3$, $Al(OH)_3$ et le talc.

5. Procédé de préparation de particules minérales enrobées d'élastomère se présentant sous une forme individualisée caractérisé en ce qu'il consiste à :
   a) faire réagir des particules minérales avec au moins un agent de couplage renfermant au moins une séquence polyoxyéthylénique et avec au moins un latex d'élastomère,
   b) séparer la phase liquide des particules,
   c) sécher lesdites particules.

6. Procédé selon la revendication 5 caractérisé en ce que les particules minérales sont choisies parmi les particules de $SiO_2$, $CaCO_3$, $Ti_20_3$, $Al(0H)_3$ et le talc.

7. Procédé selon la revendication 6 caractérisé en ce que les particules minérales présentent une surface électriquement neutre ou chargée négativement.

8. Procédé selon l'une des revendications 5 à 7 caractérisé en ce que l'agent de couplage est choisi parmi les copolymères biséquencés AB ou triséquencés ABA ou BAB où A représente une séquence polyoxyéthylénique et B représente une séquence choisie parmi le polyoxypropylène, le polystyrène, le polyméthacrylate de méthyle ou une séquence à base de monomères vinyliques et/ou acryliques.

9. Procédé selon la revendication 8 caractérisé en ce que la masse moléculaire moyenne en nombre de chaque séquence polyoxyéthylénique est au moins égale à 1000.

10. Procédé selon l'une des revendications 8 ou 9 caractérisé en ce que la masse moléculaire moyenne en nombre de l'agent de couplage est au moins égale à 1500.

11. Procédé selon l'une des revendications 5 à 10 caractérisé en ce que l'élastomère comporte des fonctions renfermant des groupes d'acides carboxyliques et/ou d'anhydrides d'acide répartis de manière statistique.

12. Procédé selon la revendication 11 caractérisé en ce que l'élastomère est choisi parmi les homopolymères à base de monomères diéniques et les copolymères à base de monomères diéniques et styrèniques ou (meth)acryliques de formule

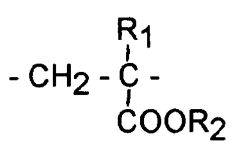

dans laquelle

$R_1$ représente un atome d'hydrogène ou un groupement méthyle

$R_2$ représente une chaîne alkyle linéaire, ramifiée ou cyclique contenant de 1 à 12 atomes de carbone.

13. Utilisation des particules minérales enrobées d'élastomère selon la revendication 1 pour le renforcement

de polymères thermoplastiques.

**14.** Utilisation selon la revendication 13 caractérisée en ce que les particules minérales enrobées d'élastomère sont incorporées au moment de la polymérisation radicalaire ou anionique.

**15.** Utilisation selon la revendication 13 caractérisée en ce que les particules minérales enrobées d'élastomère sont incorporées au moment de l'extrusion.

**16.** Polymère thermoplastique renforcé caractérisé en ce qu'il comprend des particules minérales selon la revendication 1.

**17.** Polymère selon la revendication 16 caractérisé en ce qu'il consiste en le polystyrène ou un alliage essentiellement à base de polystyrène.

**18.** Polymère selon la revendication 16 caractérisé en ce qu'il consiste en le polyméthacrylate de méthyle ou un alliage essentiellement à base de polyméthacrylate de méthyle.

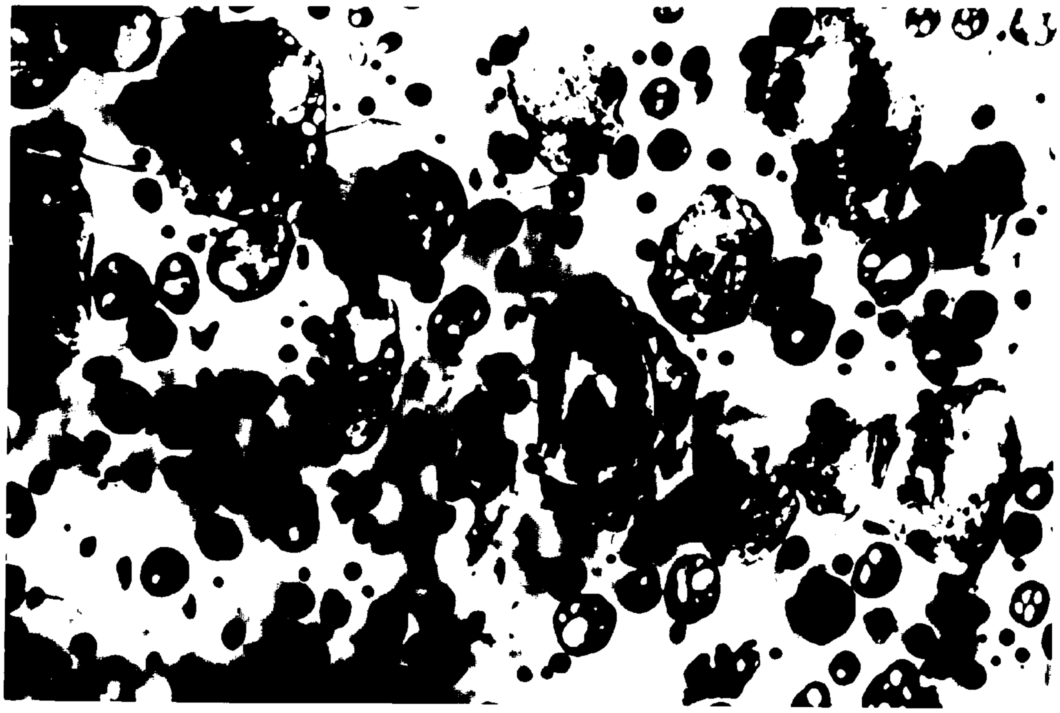

Photo 1 1 cm = 1,67 µm

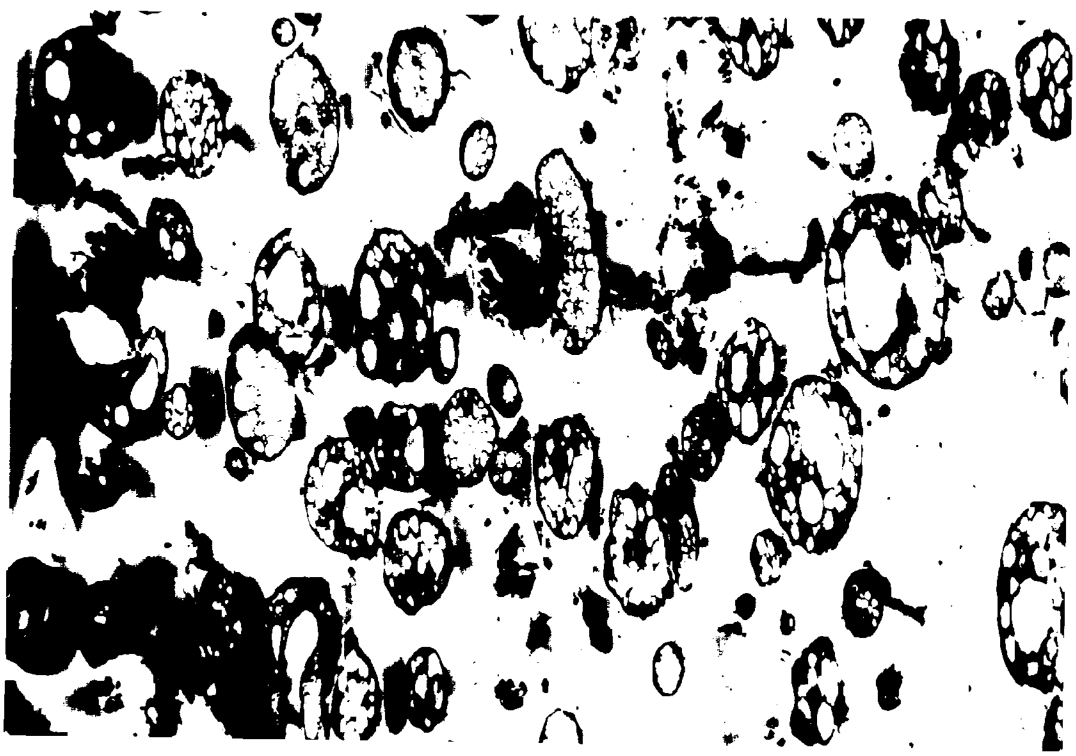

Photo 2 : 1 cm = 0,83 µm

Office européen des brevets

# RAPPORT DE RECHERCHE EUROPEENNE

Numero de la demande
EP 94 40 2257

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 142 784 (BAYER AG)<br>* page 10; exemple 1 * | 1,4,13 | C08K9/10 |
| X | DATABASE WPI<br>Derwent Publications Ltd., London, GB;<br>AN 88-136409<br>& JP-A-63 077 952 (NIPPON ZEON KK) 8 Avril 1988<br>* abrégé * | 1,4 | |
| X | DE-A-19 39 544 (DEUTSCHE AKADEMIE DER WISSENSCHAFTEN)<br>* page 4 *<br>* revendication * | 1 | |
| X | US-A-3 080 256 (WAYNE M. BUNDY)<br>* exemple 1 * | 1 | |
| | | | DOMAINES TECHNIQUES RECHERCHES (Int.Cl.6) |
| | | | C08K |

Le présent rapport a été établi pour toutes les revendications

| Lieu de la recherche | Date d'achèvement de la recherche | Examinateur |
|---|---|---|
| LA HAYE | 4 Janvier 1995 | Siemens, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)